# EUROPEAN PATENT APPLICATION

(11) **EP 4 821 721 A1**
(43) Date of publication of application: **14.10.2026**
(21) Application number: 26154312.8
(22) Date of filing: 27.01.2026
(51) Int. Cl.: B60K 1/04

(54) **LOWER STRUCTURE FOR ELECTRIC VEHICLE**

(30) Priority: 08.04.2025 JP 2025063853
(71) Applicant: Suzuki Motor Corporation, Hamamatsu-shi, Shizuoka 432-8611 (JP)
(72) Inventor: OGAWA, Ryoji, Hamamatsu-shi, 432-8611 (JP); HIRANO, Kiyotaka, Hamamatsu-shi, 432-8611 (JP); KATO, Koji, Hamamatsu-shi, 432-8611 (JP)
(74) Representative: Plasseraud IP

(57) **Abstract**

A lower structure for an electric vehicle includes: a side sill 2 that is disposed outside a battery pack 1; a floor cross member 41 that is joined to the upper part of a floor panel 42; and a reinforcing bracket 30 that is disposed on the lower side of the outer part of the floor cross member 41 with the floor panel 42 interposed therebetween, wherein the reinforcing bracket 30 includes vertical wall parts 31 and 32 that are spaced apart from each other in the longitudinal direction and are joined to the side sill 2 and the floor part, and an inside wall part 33 that connects the vertical wall parts, is spaced on the outer part of the battery pack, inclines downward as the inside wall part extends outward, and extends to the lower part of the side sill 2, and fragile portions 31h and 32h are provided in the outer portions of the upper parts of the vertical wall parts 31 and 32.

## Description

### [Technical Field]

The present invention relates to lower structures for electric vehicles.

### [Background Art]

For example, as disclosed in Patent Literature 1, a motor vehicle including a battery pack located on the lower side of a floor part is known. Battery packs are required to have larger capacities to extend the driving ranges of motor vehicles. In order to increase the battery capacity of a battery pack, the battery pack may be increased in size, for example, the dimensions of the battery pack may be increased in the vehicle longitudinal direction, the vehicle width direction, and the vehicle vertical direction.

Considering increasing the size of a battery pack in the vehicle vertical direction and a ground clearance or the like, a floor panel constituting the floor part needs to be located higher. For example, in the above example, the floor panel is installed on the side sills.

As the dimensions of the battery pack increase in the vehicle width direction, the gap between the side of the battery pack and the inner part of the side sill decreases. For example, the battery pack needs protection from an impact load caused by a lateral collision (side collision), which is a collision of an object or the like with the side part of the vehicle body from the outside in the vehicle width direction. In the structure disclosed in Patent Literature 1, gussets are provided in the side sill. When an impact load is applied, the gussets are crushed to absorb the impact load.

The structure of the example includes the gusset that is joined to the inside wall portion of the side sill and the floor panel and has a wall tilting toward the undersurface of the floor panel, and a cross member that is disposed above the gusset with the tilted wall and is joined to the upper surface of the floor panel. With this configuration, when an impact load is applied to the side sill, some of the impact load is transmitted to the cross member through the gusset with the tilted wall.

### [Citation List]

### [Patent Literature]

[Patent Literature 1] JP 2018-193026 A

### [Summary of Invention]

### [Problem to be Solved by the Invention]

In the structure of the above example, some of an impact load applied by a side collision or the like is transmitted to the cross member on the floor panel through the gusset with the tilted wall. However, it is difficult for the gusset with the tilted wall of the example to obtain rigidity against a load in the vehicle width direction. For example, when an impact load is applied, the load is directly transmitted from the inside wall part to the tilted wall of the side sill. Thus, crushing of the tilted wall may interfere with effective transmission of the load to the cross member.

In the gusset with the tilted wall according to the above example, if the rigidity of the tilted wall is improved to reduce crushing of the tilted wall, the tilted wall having high rigidity may be thrust upward to deform the floor panel. Thus, in the structure of the example, when an impact load caused by a side collision or the like is applied to the side sill, for example, there is room for improvement in transmitting some of the impact load effectively to the vehicle body structure while absorbing some of the impact load.

The present invention was made to solve the above-described problem, and an object of the invention is to provide a lower structure for an electric vehicle, by which when an impact load generated in a side collision is applied to the side part of a vehicle body, some of the impact load can be transmitted effectively to a vehicle body structure while being absorbed, achieving effective protection of a battery pack from the impact load.

### [Means for Solving the Problem]

A lower structure for an electric vehicle according to the present invention for achieving the object includes: a battery pack disposed on the lower side of the floor part of a vehicle; a side sill that is disposed outside the battery pack in the vehicle width direction, is joined to the floor part, and extends in the vehicle longitudinal direction; and a cross member that is joined to the upper part of the floor part and extends in the vehicle width direction. The lower structure for the electric vehicle includes a bracket that is disposed on the vehicle lower side of the outer part of the floor cross member in the vehicle width direction with the floor part interposed therebetween, wherein the bracket includes vertical wall parts that are spaced apart from each other in the vehicle longitudinal direction and are joined to the side sill and the floor part, and an inside wall part that connects the vertical wall parts at a front side and at a rear side, the inside wall part is spaced on the outer part of the battery pack, inclines toward the lower side of the vehicle as the inside wall part extends from the inner end in the vehicle width direction to the outside in the vehicle width direction, and extends to the inner part of the side sill in the vehicle width direction, and a fragile portion is provided in the outer portion of the upper part of the vertical wall part in the vehicle width direction.

### [Advantageous Effect of Invention]

According to the present invention, when an impact load generated in a side collision is applied to the side part of a vehicle body, some of the impact load can be transmitted effectively to a vehicle body structure while being absorbed, thereby effectively protecting a battery pack from the impact load.

### [Brief Description of Drawings]

[Figure 1] Figure 1 is a perspective view showing an embodiment of a lower structure for an electric vehicle according to the present invention.
[Figure 2] Figure 2 is a perspective view in which a bracket of Figure 1 is viewed from below.
[Figure 3] Figure 3 is a bottom view of Figure 1.
[Figure 4] Figure 4 is a schematic cross-sectional view taken along line A-A of Figure 3.
[Figure 5] Figure 5 is a perspective view showing the bracket of Figure 1 alone.
[Figure 6] Figure 6 is a side view in which the bracket of Figure 5 is viewed from the outside in the vehicle width direction.

### [Mode for Carrying Out the Invention]

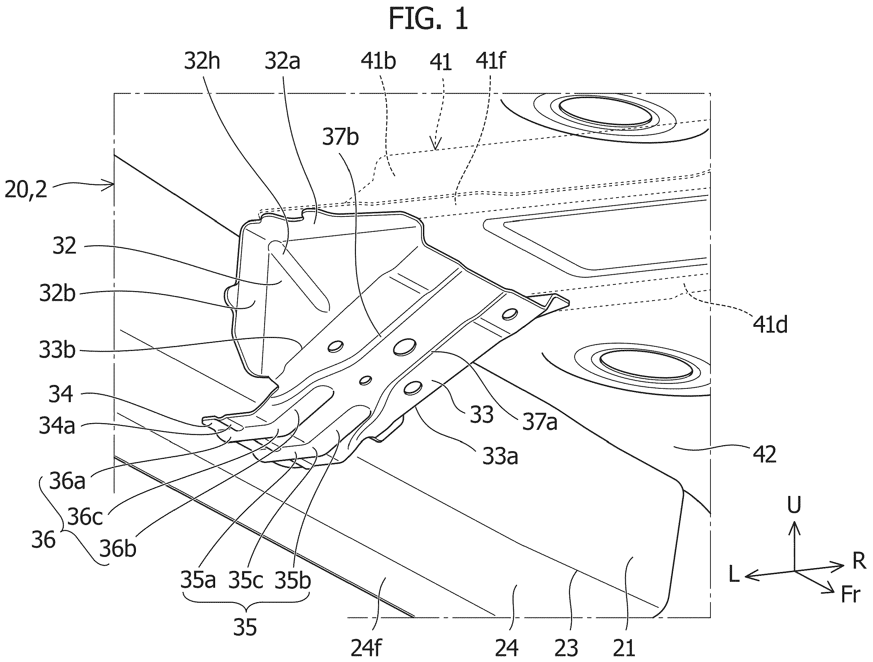

An embodiment of an electric vehicle lower structure according to the present invention will be described below with reference to the accompanying drawings (Figures 1 to 6). In the drawings, an arrow Fr direction indicates the front side in the vehicle longitudinal direction. "Front (front end) and rear (rear end)" in the description of the embodiment corresponds to the front and the rear in the vehicle longitudinal direction. Moreover, an arrow R and an arrow L indicate the right side and the left side in an occupant's view ahead of the vehicle. An arrow U indicates the upper side of the vehicle in the vehicle vertical direction.

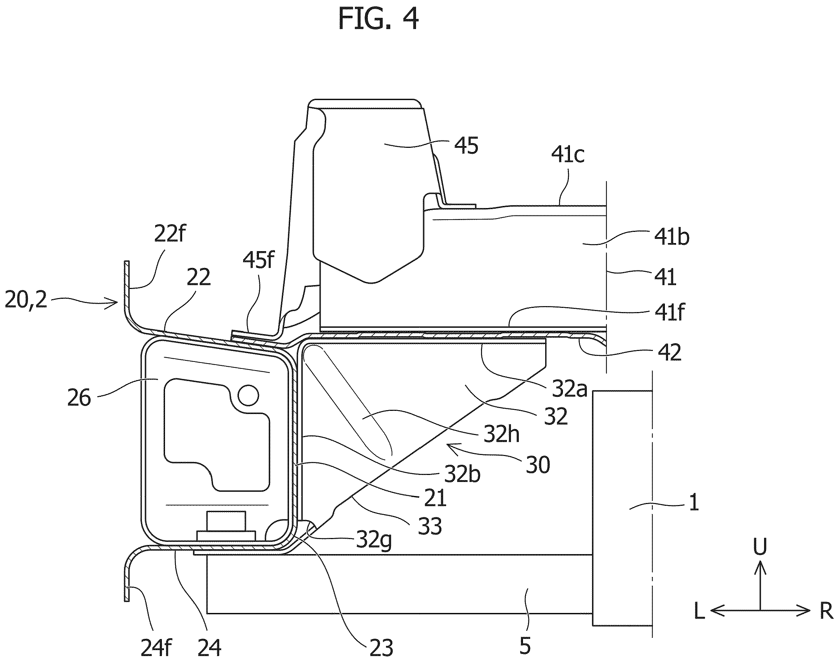

As shown in Figures 1 and 4, the electric vehicle lower structure of the present embodiment includes a battery pack 1 that is disposed on the lower side of the floor part of a vehicle, a side sill 2 that is disposed outside the battery pack 1 in the vehicle width direction, is joined to the floor part, and extends in the vehicle longitudinal direction, and a floor cross member 41 (cross member) that is joined to the upper portion of the floor part and extends in the vehicle width direction. In addition, the lower structure includes a reinforcing bracket 30 (bracket) that is disposed on the vehicle lower side of the outer part of the floor cross member 41 in the vehicle width direction with the floor part interposed therebetween.

The reinforcing bracket 30 has an inside wall part 33 that is spaced on the outer part of the battery pack 1, inclines toward the lower side of the vehicle as the inside wall part extends from the inner end in the vehicle width direction to the outside in the vehicle width direction, and extends to the lower part of the side sill 2. The reinforcing bracket 30 further includes a lower joining portion 34 and protruding portions 35 and 36. The lower joining portion 34 extends outward in the vehicle width direction from the outer portion of the inside wall part 33 in the vehicle width direction and is joined to the lower portion of the side sill 2. The protruding portions 35 and 36 further protrude downward and extend from the lower joining portion 34 to the inside wall part 33.

The reinforcing bracket 30 includes a front wall part 31 (vertical wall part) and a rear wall part 32 (vertical wall part) that are spaced apart from each other in the vehicle longitudinal direction and are joined to the side sill 2 and the floor part, and the inside wall part 33 that connects the front wall part 31 and the rear wall part 32 (front and rear vertical wall parts). The inside wall part 33 is spaced on the outer part of the battery pack 1, inclines to the lower side of the vehicle as the inside wall part extends from the inner end in the vehicle width direction toward the outside in the vehicle width direction, and extends to the inner portion of the side sill 2 in the vehicle width direction. Fragile portions 31h and 32h are provided in the outer portions of the upper parts of the front wall part 31 and the rear wall part 32 in the vehicle width direction.

As described above, as shown in Figures 1 to 3, the lower structure of the present embodiment includes a floor panel 42, the floor cross member 41 (cross member), the battery pack 1, the side sill 2, the reinforcing bracket 30 (bracket), and a battery holding member 5.

The floor panel 42 is a panel that constitutes the floor part of a vehicle compartment and is made of a metallic material. The floor panel 42 is a panel that extends in the vehicle longitudinal direction and the vehicle width direction and has predetermined rigidity.

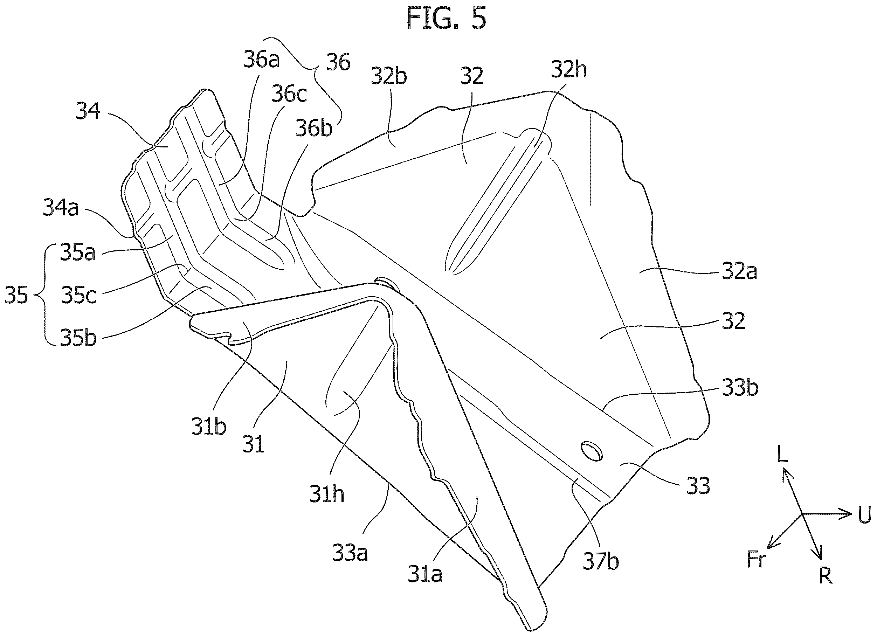

The side sill 2 is a part that constitutes the lower part of the side part of the vehicle body and is disposed at, for example, the lower part of the opening part of a side door (not shown). As shown in Figures 1 to 4, the side sill 2 is a part extending in the vehicle longitudinal direction. As shown in Figures 4 and 5, the side sill 2 is joined to the outer part of the undersurface of the floor panel 42 in the vehicle width direction. The side sill 2 of the present embodiment has an outer part constituting the outermost part of the vehicle and an inner part joined to the inside of the outer part in the vehicle width direction. The side sill 2 has a cross-sectional shape of a closed section that is formed by the outer part and the inner part.

The outer part of the side sill 2 includes, for example, a side-sill outer panel (not shown) and a reinforcement (not shown) disposed in the side-sill outer panel. Furthermore, the lower part of a side-body outer panel is disposed outside the side-sill outer panel. The side-body outer panel is a rigid panel constituting the outermost part of the vehicle and has a design surface facing the outside of the vehicle. The lower part of the side-body outer panel extends in the vehicle longitudinal direction and is disposed at, for example, the lower part of the opening part of a front side door, the lower part of a center pillar (not shown), and the lower part of the opening part of a rear side door.

The side-sill outer panel constituting the outer part of the side sill 2 extends in the vehicle longitudinal direction and has an outer wall part, an outer upper-surface part, and an outer bottom part, of which illustration is omitted. The outer wall part faces outward in the vehicle width direction and is disposed inside the lower part of the side-body outer panel in the vehicle width direction. The outer upper-surface part extends inward from the upper end of the outer wall part in the vehicle width direction and extends in the vehicle longitudinal direction. In addition, an upper outer flange protruding upward may be provided on the inner end of the outer upper-surface part in the vehicle width direction. The outer bottom part extends inward from the lower end of the outer wall part in the vehicle width direction and extends in the vehicle longitudinal direction. A lower outer flange protruding downward may be provided on the inner end of the outer bottom part in the vehicle width direction.

The inner part of the side sill 2 includes a side-sill inner panel 20 and an inner reinforcement 26. As shown in Figures 1 and 4, the side-sill inner panel 20 of the side sill 2 has an inside wall-surface part 21, an inner upper-surface part 22, and an inner bottom part 24 (bottom part). The inside wall-surface part 21 is spaced inside the outer wall part of the side-sill outer panel in the vehicle width direction, faces inward in the vehicle width direction, and extends in the vehicle longitudinal direction. The reinforcing brackets 30 are joined to the inside wall-surface part 21. The reinforcing brackets 30 are spaced apart from each other in the vehicle longitudinal direction along the inside wall-surface part 21. The reinforcing bracket 30 will be specifically described later.

The inner upper-surface part 22 extends outward from the upper end of the inside wall-surface part 21 in the vehicle width direction and extends in the vehicle longitudinal direction. Furthermore, the inner upper-surface part 22 slightly inclines upward as it extends toward the outside in the vehicle width direction. The inner upper-surface part 22 is joined to an outer part on the undersurface of the floor panel 42 in the vehicle width direction by spotwelding. In addition, an upper inner flange 22f protruding upward is provided on the outer end of the inner upper-surface part 22 in the vehicle width direction. The upper inner flange 22f is joined to the upper outer flange, which is not shown, by spotwelding.

The inner bottom part 24 extends outward from the lower end of the inside wall-surface part 21 in the vehicle width direction and extends in the vehicle longitudinal direction. In addition, a lower inner flange 24f protruding downward is provided on the outer end of the inner bottom part 24 in the vehicle width direction. The lower inner flange 24f is joined to a lower outer flange, which is not shown, by spotwelding. Furthermore, the battery holding member 5 is fastened to the inner bottom part 24 with fastening members such as bolts.

As shown in Figure 4, the inner reinforcement 26 is a metallic plate member disposed between a side-sill outer panel constituting the outside of the side sill 2 and the side-sill inner panel 20 in the vehicle width direction. For example, the inner reinforcement 26 extends between the inner upper-surface part 22 and the inner bottom part 24 in the vehicle vertical direction and is joined to the inside wall-surface part 21.

As shown in Figure 4, the floor cross member 41 is a member extending in the vehicle width direction. The floor cross member 41 is a rigid member that is made of a metallic material and constitutes a part of the vehicle body frame. The floor cross member 41 is joined to the upper surface of the floor panel 42 by spotwelding or the like. The reinforcing bracket 30 is disposed on the lower side of the outer part of a floor cross member 41 in the vehicle width direction with the floor panel 42 interposed therebetween.

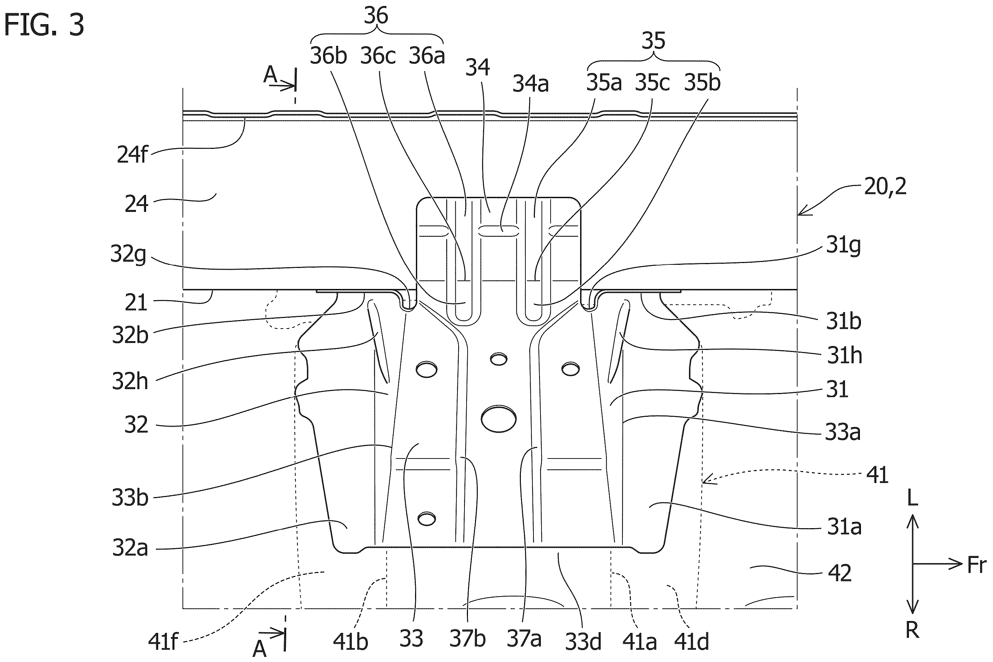

As shown in Figures 1 and 3, the floor cross member 41 has a front wall portion 41a, a rear wall portion 41b, and an upper surface portion 41c. The upper surface portion 41c has a flat surface facing upward and is spaced above the upper surface of the floor panel 42. The front wall portion 41a extends downward from the front end of the upper surface portion 41c and faces the front of the vehicle. On the lower end of the front wall portion 41a, a front member flange 41d protruding to the front of the vehicle is provided. The front member flange 41d is joined to the upper surface of the floor panel 42 by spotwelding. The rear wall portion 41b extends downward from the rear end of the upper surface portion 41c and faces the rear of the vehicle. On the lower end of the rear wall portion 41b, a rear member flange 41f protruding to the rear of the vehicle is provided. The rear member flange 41f is joined to the upper surface of the floor panel 42 by spotwelding.

As shown in Figure 4, the battery pack 1 is spaced below the floor panel 42. The battery pack 1 is a so-called heavy object, which is almost a rectangular solid extending in the vehicle longitudinal direction and the vehicle width direction. Although the illustration is omitted, a connector (not shown) to connect a harness (not shown) is provided at the front of the battery pack 1. The side of the battery pack 1 is held by the side sill 2 constituting the side part of the vehicle body, with the battery holding member 5 interposed therebetween. In this example, the battery holding member 5 is fastened to the inner bottom part 24 of the side-sill inner panel 20, described below, of the side sill 2 with a fastening member.

Next, the reinforcing bracket 30 (bracket) will be described below. As shown in Figures 1 and 4, the reinforcing bracket 30 is disposed on the vehicle lower side of the outer part of the floor cross member 41 in the vehicle width direction with the floor panel 42 interposed therebetween. The reinforcing brackets 30 is almost shaped like a right triangle in the vehicle rear view or the vehicle front view. In addition, the reinforcing bracket 30 is spaced on the outer part of the battery pack 1 in the vehicle width direction.

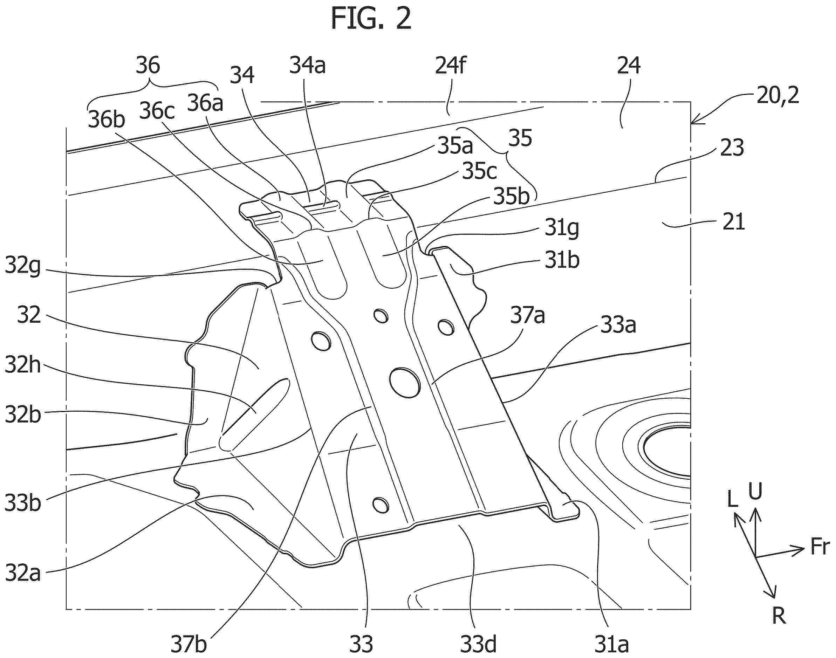

As shown in Figures 1 and 2, the reinforcing bracket 30 of the present embodiment has the front wall part 31, the rear wall part 32, and the inside wall part 33. The reinforcing bracket 30 is joined over the undersurface of the floor panel 42, the inside wall-surface part 21 of the side sill 2, and the inner bottom part 24. In this example, upper flange portions 31a and 32a, described below, of the reinforcing bracket 30 are joined to the undersurface of the floor panel 42, outer flange portions 31b and 32b, described below, of the reinforcing bracket 30 are joined to an inner side part 21 of the side sill 2, and the lower joining portion 34 of the reinforcing bracket 30 is joined to the inner bottom part 24 of the side sill 2. The details of the portions and the joining will be described below.

As shown in Figures 1 and 2, the front wall part 31 has a wall surface facing the front of the vehicle and is almost triangular in the front view of the vehicle. In other words, the inner portion of the front wall part 31 has an inclined edge. The upper portion of the front wall part 31 extends in the vehicle width direction along the undersurface of the floor panel 42. The front upper flange portion 31a is provided in the upper portion of the front wall part 31. As shown in Figures 1 and 3, the front upper flange portion 31a is a portion that protrudes from the upper end of the front wall part 31 to the front of the vehicle and extends in the vehicle width direction. The front upper flange portion 31a is joined to the undersurface of the floor panel 42 by spotwelding. In the present embodiment, the front upper flange portion 31a, the floor panel 42, and the front member flange 41d of the floor cross member 41 are joined as a three-layer structure.

Moreover, the outer portion of the front wall part 31 in the vehicle width direction extends in the vehicle vertical direction along the inside wall-surface part 21 of the side sill 2. The front outer flange portion 31b is provided in the outer portion of the front wall part 31 in the vehicle width direction. The front outer flange portion 31b is a portion that protrudes from the outer end of the front wall part 31 to the front of the vehicle and extends in the vehicle vertical direction. The front outer flange portion 31b is joined to the inside wall-surface part 21 of the side sill 2 by spotwelding.

In addition, the front fragile portion 31h (fragile portion) is provided on the front wall part 31. The front fragile portion 31h is provided in the outer portion of the upper part of the front wall part 31 in the vehicle width direction. The front fragile portion 31h of the present embodiment extends from the outer portion of the upper part of the front wall part 31 in the vehicle width direction toward the inside wall part 33. In this example, the front fragile portion 31h extends to incline downward toward the inside in the vehicle width direction. The front wall part 31 is almost shaped like a rectangular equilateral triangle, and the front fragile portion 31h extends from the vertex of a right angle in a direction at about 45° so as to divide the right angle into two equal portions (Figure 4).

The front fragile portion 31h extends along the inclination direction with the front side protruding with respect to the wall surface of the front wall part 31. Thus, against a load applied from the outside of the front wall part 31 in the vehicle width direction, the front wall part 31 can deform starting from the front fragile portion 31h such that the front fragile portion 31h protrudes frontward to bend.

As shown in Figures 1 and 2, the rear wall part 32 has a wall surface facing the rear of the vehicle and is almost triangular in the rear view of the vehicle. In other words, the inner portion of the rear wall part 32 has an inclined edge like the front wall part 31. The upper portion of the rear wall part 32 extends in the vehicle width direction along the undersurface of the floor panel 42. As in the front wall part 31, the rear upper flange portion 32a is provided in the upper portion of the rear wall part 32. As shown in Figures 1 and 3, the rear upper flange portion 32a is a portion that protrudes from the upper end of the rear wall part 32 to the rear of the vehicle and extends in the vehicle width direction. The rear upper flange portion 32a is joined to the undersurface of the floor panel 42 by spotwelding. Furthermore, in the present embodiment, the rear upper flange portion 32a, the floor panel 42, and the rear member flange 41f of the floor cross member 41 are joined as a three-layer structure.

Moreover, the outer portion of the rear wall part 32 in the vehicle width direction extends in the vehicle vertical direction along the inside wall-surface part 21 of the side sill 2. As in the front wall part 31, the rear outer flange portion 32b is provided in the outer portion of the rear wall part 32 in the vehicle width direction. The rear outer flange portion 32b is a portion that protrudes from the outer end of the rear wall part 32 to the rear of the vehicle and extends in the vehicle vertical direction. The rear outer flange portion 32b is joined to the inside wall-surface part 21 of the side sill 2 by spotwelding.

In addition, as shown in Figures 1 and 2, the upper portion of the rear outer flange portion 32b extends to the upper end of the outer portion of the rear wall part 32 in the vehicle width direction, curves inward in the vehicle width direction, and is connected to the rear upper flange portion 32a. For example, the rear outer flange portion 32b and the rear upper flange portion 32a may be integrally formed. Moreover, the front outer flange 31b may be similarly formed.

In addition, the upper portion of the rear outer flange portion 32b may be protruded inward in the vehicle width direction, and the protruded portion may be joined to the outer portion of the rear upper flange portion 32a in the vehicle width direction. In this case, the protruded portion, the outer portion of the rear upper flange portion 32a in the vehicle width direction, and the floor panel 42 may be stacked and joined as a three-layer structure.

Like the front wall part 31, the rear wall part 32 has the rear fragile portion 32h (fragile portion). The rear fragile portion 32h is provided in the outer portion of the upper part of the rear wall part 32 in the vehicle width direction. The rear fragile portion 32h of the present embodiment extends from the outer portion of the upper part of the rear wall part 32 in the vehicle width direction toward the inside wall part 33. In this example, like the front fragile portion 31h, the rear fragile portion 32h extends to incline downward toward the inside in the vehicle width direction. Like the front wall part 31, the rear wall part 32 is almost shaped like a rectangular equilateral triangle, and the rear fragile portion 32h extends from the vertex of a right angle in a direction at about 45° so as to divide the right angle into two equal portions.

The rear fragile portion 32h extends along the inclination direction with the rear side protruding with respect to the wall surface of the rear wall part 32. Thus, against a load applied from the outside of the rear wall part 32 in the vehicle width direction, the rear wall part 32 can deform starting from the rear fragile portion 32h such that the rear fragile portion 32h protrudes rearward to bend. In other words, the front fragile portion 31h protrudes frontward and the rear fragile portion 32h protrudes rearward to bend, allowing the reinforcing bracket 30 to absorb part of the impact energy of an impact load as deformation energy. The load absorption will be described later.

As shown in Figures 1 and 2, the inside wall part 33 of the reinforcing bracket 30 inclines toward the lower side of the vehicle as the inside wall part extends from the inner end of the reinforcing bracket 30 in the vehicle width direction toward the outside in the vehicle width direction, and extends to the lower part of the side sill 2. In this example, the inside wall part 33 extends to a corner portion 23 formed by the inner bottom part 24 and the inside wall-surface part 21 of the side sill 2. In addition, the inside wall part 33 extends in the vehicle longitudinal direction to connect the inclined edge of the front wall part 31 and the inclined edge of the rear wall part 32. Furthermore, an inner gap portion 33d is provided between the inner end of the inside wall part 33 in the vehicle width direction and the undersurface of the floor panel 42. A front edge-line portion 33a is formed by the inside wall part 33 and the front wall part 31. The front edge-line portion 33a is formed to curve upward as it extends toward the front. Likewise, a rear edge-line portion 33b is formed by the inside wall part 33 and the rear wall part 32. The rear edge-line portion 33b is formed to curve upward as it extends toward the rear.

The lower joining portion 34 is provided in the outer portion of the inside wall part 33 in the vehicle width direction. The lower joining portion 34 extends outward in the vehicle width direction from the outer end of the inside wall part 33 in the vehicle width direction and is joined to the lower portion of the side sill 2. In this example, the lower joining portion 34 is joined to the inner portion of the inner bottom part 24 of the side-sill inner panel 20 in the vehicle width direction by spotwelding. Moreover, the width of the lower joining portion 34 (the length in the vehicle longitudinal direction) is formed shorter than the width of the intermediate portion of the inside wall part 33 in the vehicle width direction (the length in the vehicle longitudinal direction). The front end of the lower joining portion 34 is disposed behind the front edge-line portion 33a in the vehicle longitudinal direction, and the rear end of the lower joining portion 34 is disposed in front of the rear edge-line portion 33b.

The lower joining portion 34 extends from the central portion of the inner bottom part 24 in the vehicle width direction to the lower end (corner portion 23) of the inside wall-surface part 21 and is connected to the outer end of the inside wall part 33. Furthermore, the lower joining portion 34 and the inside wall part 33 are integrally formed.

As shown in Figures 1 to 3, the reinforcing bracket 30 of the present embodiment has the two protruding portions 35 and 36 protruding downward, that is, the front protruding portion 35 and the rear protruding portion 36.

The front protruding portion 35 and the rear protruding portion 36 are spaced apart from each other in the vehicle longitudinal direction, extend from the outer end of the lower joining portion 34 in the vehicle width direction to the inside in the vehicle width direction, and extend beyond the corner portion 23 to the intermediate portion of the inside wall part 33 in the vehicle width direction. In other words, the front protruding portion 35 and the rear protruding portion 36 are provided in the lower joining portion 34 and the inside wall part 33 and are arranged to extend beyond the corner portion 23.

The front protruding portion 35 is composed of a horizontal front protruding portion 35a and an inclined front protruding portion 35b. The horizontal front protruding portion 35a is provided in the lower joining portion 34 and extends almost horizontally along the vehicle width direction, and the inclined front protruding portion 35b extends along the inclination direction of the inside wall part 33. The rear protruding portion 36 is spaced behind the front protruding portion 35. Like the front protruding portion 35, the rear protruding portion 36 is composed of a horizontal rear protruding portion 36a and an inclined rear protruding portion 36b.

As shown in Figure 1, the lower joining portion 34 of the present embodiment has a rib 34a that extends in the vehicle longitudinal direction so as to intersect the protruding portions 35 and 36. The rib 34a protrudes downward, and the lower end of the rib 34a is spaced on the inner bottom part 24. The lower joining portion 34 located outside and inside the rib 34a in the vehicle width direction is joined to the inner bottom part 24 by spotwelding. This can reduce a welding region, allowing local welding. Furthermore, a contact area between metallic materials can be reduced in size, thereby reducing, for example, the occurrence of rust. The rib 34a may not be required, depending on the size of the lower joining portion 34.

The provision of the reinforcing bracket 30 enables the side sill 2 to resist so as to reduce deformation of the side sill 2 against an impact load applied to the side sill 2 by a lateral collision (side collision) or the like.

In addition, a side collision may apply an impact load so as to deform the side sill 2 inward in the vehicle width direction. When such an impact load is applied, first, the lower part of the side-body outer panel is pressed, and then the side-sill outer panel constituting the outer part of the side sill 2 is pressed. Consequently, the side-sill outer panel or the like is deformed so as to be crushed inward in the vehicle width direction. Thus, the impact load is partially absorbed by the outer part of the side sill 2.

When a side collision occurs, even if an impact load is applied almost horizontally (one direction) to the inside in the vehicle width direction, after the outer part of the side sill 2 is crushed as described above, a load transmitted to the inner part of the side sill 2 may be distributed vertically and horizontally toward the inside in the vehicle width direction. In other words, in a side collision, the outer part of the side sill 2 is crushed such that a load is applied to the inner part of the side sill 2 in an upward or downward inclined direction as well as in the direction of entry parallel (horizontal) to the vehicle, by load distribution.

The upper part of the side sill 2 has members constituting the side of the floor panel 42, the outer part of the floor cross member 41, and the center pillar or the like arranged, and thus is joined to a greater number of members than the lower part of the side sill 2. Thus, the upper part of the side sill 2 has higher rigidity than the lower part of the side sill 2 in the vehicle width direction. For example, a load applied in the vehicle width direction in a side collision may partially enter such that the inner lower part of the side sill 2 in the vehicle width direction rotates upward. When such a load is applied, the vicinity of the corner portion 23 of the side sill 2 deforms to rotate about a virtual axis counterclockwise in Figure 4, the virtual axis extending in the longitudinal direction while being located outside and above the corner portion 23 in the vehicle width direction. In this case, the lower part (the corner portion 23 in Figure 4) of the side sill 2 deforms to incline upward toward the inside in the vehicle width direction.

In this way, a load is applied to rotate the side sill 2, so that a load may be transmitted to the inner bottom part 24 of the side-sill inner panel 20 in an upward direction toward the inside in the vehicle width direction. The side-sill inner panel 20 is deformed to crush inward in the vehicle width direction by the load, and the inner end of the inner bottom part 24 is deformed to rotate upward toward the inside in the vehicle width direction. At this time, the impact load is partially absorbed by the crushing of the side-sill inner panel 20, and the impact load is partially transmitted to the reinforcing bracket 30.

In the present embodiment, when a load is applied from the side-sill inner panel 20 to the reinforcing bracket 30 in the direction as explained above, the load is transmitted to the front wall part 31 and the rear wall part 32 of the reinforcing bracket 30, so that the front wall part 31 and the rear wall part 32 can deform to bend starting from the front fragile portion 31h and the rear fragile portion 32h, respectively. Thus, the impact load transmitted from the side sill 2 to the reinforcing bracket 30 is partially absorbed by deformation of the front wall part 31 and the rear wall part 32, and the impact load is partially transmitted to the floor cross member 41 effectively.

Since the front wall part 31 and the rear wall part 32 of the reinforcing bracket 30 are effectively crushed, transmission of an excessive load to the floor cross member 41 can be reduced. This can reduce deformation of the outer part of the floor cross member 41 in the vehicle width direction in such a way that it is pushed upward by the upper portion of the inner end of the reinforcing bracket 30 in the vehicle width direction. Thus, in a side collision, deformation such that the vehicle body structure (floor cross member 41) protrudes into the vehicle compartment can be reduced.

In the present embodiment, the lower joining portion 34 is joined to the inner bottom part 24 of the side-sill inner panel 20 of the side sill 2, and the lower joining portion 34 extends to connect to the inside wall part 33 of the reinforcing bracket 30. Thus, the corner portion 23 (the corner portion 23 formed by the inner bottom part 24 and the inside wall-surface part 21) of the side sill 2 can be more effectively supported by the lower joining portion 34 of the reinforcing bracket 30.

A load applied to the reinforcing bracket 30 is partially absorbed by deformation of the front wall part 31 and the rear wall part 32; in addition, the load can be transmitted from the lower joining portion 34 to the inside wall part 33 and can be transmitted to the floor cross member 41. In other words, the reinforcing bracket 30 partially absorbs a load while transmitting the load to the floor cross member 41, thereby reducing the application of the impact load to the battery pack 1. Consequently, when an impact load generated in a side collision is applied to the side part of the vehicle body, the battery pack 1 can be effectively protected from the impact load.

In the present embodiment, as described above, the fragile portions 31h and 32h extend to the inside wall part. Thus, when load transmission occurs in a direction from the side sill 2 to the floor cross member 41, crushing of the front wall part 31 and the rear wall part 32 can be promoted by the fragile portions 31h and 32h. In addition, the fragile portions 31h and 32h of this example can increase rigidity in a direction orthogonal to the inside wall part 33.

In the present embodiment, as shown in Figures 1, 2, and 5, the fragile portions 31h and 32h are provided at the corner portion formed by the outer portion and the upper portion of the front wall part 31 (vertical wall part) in the vehicle width direction and the corner portion formed by the outer portion and the upper portion of the rear wall part 32 (vertical wall part) in the vehicle width direction.

When an impact load caused by a side collision is applied to the side sill 2, the side sill 2 rotates about the rotation axis, which is the joining portion between the side sill 2 and the floor panel 42, so that the side sill 2 moves inward. At this time, since the upper portions of the fragile portions 31h and 32h are located at positions adjacent to the rotation axis in the vehicle width direction, the longitudinal directions of the fragile portions 31h and 32h are arranged so as to intersect the rotation direction. Thus, the fragile portions 31h and 32h are effective as starting points of deformation. For example, the longitudinal directions of the fragile portions 31h and 32h may be equivalent to the radial direction of the rotation.

Moreover, as described above, the front edge-line portion 33a and the rear edge-line portion 33b are formed in the present embodiment. In addition, the front fragile portion 31h and the front edge-line portion 33a are spaced apart from each other, and the rear fragile portion 32h and the rear edge-line portion 33b are spaced apart from each other. Thus, rigidity can be obtained in the edge-line directions (the inclination direction of the inside wall part 33) of the front edge-line portion 33a and the rear edge-line portion 33b, so that diminishing of the effect of transmitting a load from the inside wall part 33 to the floor cross member 41 to a certain degree or more can be reduced. In other words, the reinforcing bracket 30 of the present embodiment can keep a predetermined load transmission effect.

In addition, as described above, the lower joining portion 34 (extending portion) is provided in the present embodiment. As shown in Figures 1 and 2, the inner portions of the fragile portions 31h and 32h are disposed inside the inner portion of the lower joining portion 34 in the vehicle width direction. Thus, when a load is transmitted from the lower joining portion 34 to the inside wall part 33, specifically, immediately after a load is transmitted from the lower joining portion 34 to the inside wall part 33, the deformation of the front wall part 31 can be promoted to protrude the front fragile portion 31h frontward, and the deformation of the rear wall part 32 can be promoted to protrude the rear fragile portion 32h rearward. Consequently, a load applied from the inside wall part 33 to the floor cross member 41 can be partially absorbed effectively by the front wall part 31 and the rear wall part 32.

In the present embodiment, a transmission path for transmitting a load from the side sill 2 to the reinforcing bracket 30 includes a first path for transmission from the lower joining portion 34 to the floor cross member 41 through the inside wall part 33, a second path for transmission from the front outer flange portion 31b to the floor cross member 41 through the front wall part 31, and a third path for transmission from the rear outer flange portion 32b to the floor cross member 41 through the rear wall part 32.

In the present embodiment, since the first transmission path includes the front protruding portion 35 and the rear protruding portion 36, rigidity improves in the direction of transmitting a load on the first transmission path. Hence, in comparison with the second transmission path and the third transmission path where the fragile portions 31h and 32h are provided, a load can be effectively transmitted to the floor cross member 41. Thus, in the present embodiment, a load is transmitted to the floor cross member 41 while being partially absorbed through the second and third transmission paths, and the load can be effectively transmitted through the first transmission path. Consequently, the battery pack 1 can be protected while reducing excessive load transmission to the floor cross member 41.

Since the protruding portions 35 and 36 extending inward from the lower joining portion 34 are provided, support rigidity can be increased at a portion where the reinforcing brackets 30 supports the corner portion 23. A load transmitted to the inner part of the side sill 2 can be effectively transmitted to the reinforcing bracket 30. Since the reinforcing bracket 30 is joined to the outer part of the floor cross member 41 via the floor panel 42, an impact load can be partially transmitted effectively from the reinforcing bracket 30 to the cross member. In addition, the reinforcing bracket 30 of the present embodiment can reduce the swinging of the corner portion 23 of the side sill 2 as compared to a case in which the protruding portions 35 and 36 are not provided. This can improve the rigidity of the vehicle body.

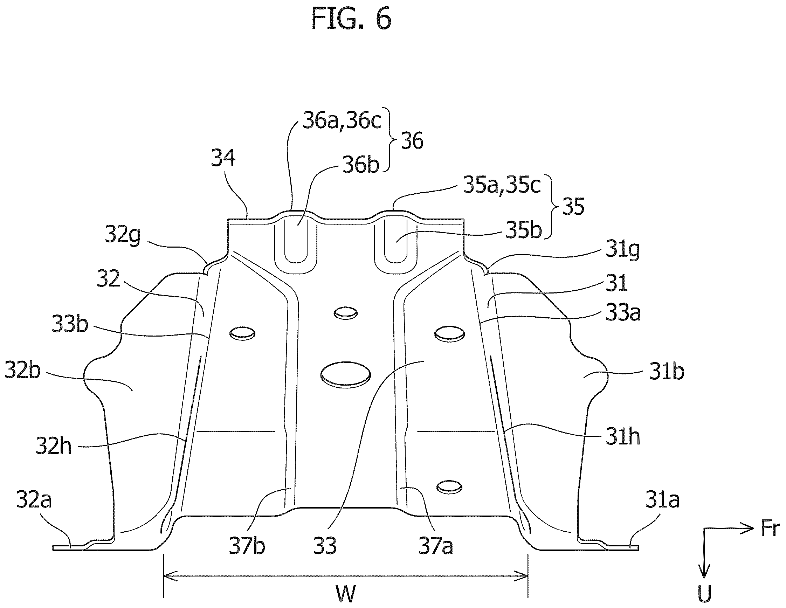

In the present embodiment, as shown in Figures 3 and 6, the front wall part 31 (the vertical wall part located at the front side) and the rear wall part 32 (the vertical wall part located at the rear side) are arranged to separate from each other in the vehicle longitudinal direction as they extend upward. For example, in Figure 6, a width indicated by W is configured to increase as it extends upward. Thus, on the front wall part 31 and the rear wall part 32, the front fragile portion 31h and the rear fragile portion 32h can be deformed like mountain folds while separating from each other.

In the present embodiment, the inside wall-surface part 21 adjacent to the lower part of the front wall part 31 and the lower part of the rear wall part 32 further includes notches 31g and 32g. The front notch 31g located at the front of the reinforcing bracket 30 is disposed between the inside wall part 33 located outside the front edge-line portion 33a in the vehicle width direction and the front outer flange portion 31b. The rear notch 32g located at the rear of the reinforcing bracket 30 is disposed between the inside wall part 33 located outside the rear edge-line portion 33b in the vehicle width direction and the rear outer flange portion 32b.

The provision of the notches 31g and 32g facilitates the formation of the front outer flange portion 31b and the rear outer flange portion 32b of the reinforcing bracket 30. Consequently, the accuracy of form of the lower joining portion 34, the front outer flange portion 31b, and the rear outer flange portion 32b is improved, thereby enabling accurately locating, for example, the front protruding portion 35 (a connecting portion 35c between the horizontal front protruding portion 35a and the inclined front protruding portion 35b) on the lower side of the corner portion 23. This applies also to the rear protruding portion 36. Consequently, a load can be effectively transmitted by the protruding portions 35 and 36.

As described above, the inside wall part 33 of the reinforcing bracket 30 of the present embodiment inclines toward the lower side of the vehicle as the inside wall part extends from the inner end in the vehicle width direction to the outside in the vehicle width direction. The inside wall part 33 has bead portions 37a and 37b extending in the inclination direction. The outer portions of the bead portions 37a and 37b in the vehicle width direction are connected to the protruding portion 35. In the present embodiment, the two bead portions 37a and 37b, that is, the front bead portion 37a and the rear bead portion 37b are spaced apart from each other in the vehicle longitudinal direction. The bead portions 37a and 37b extend from the protruding portion 35 to the upper end (the inner end in the vehicle width direction) of the inside wall part 33.

Since the front bead portion 37a and the rear bead portion 37b are provided, a load transmitted to the inclined inside wall part 33 can be transmitted upward along the inclination direction of the inside wall part 33. This can reduce deformation of the inside wall part 33, in particular, deformation in a direction orthogonal to the inside wall part 33.

In addition, the bead portions 37a and 37b of the present embodiment curve to the front of the vehicle and the rear of the vehicle as they extend outward in the vehicle width direction. The outer portions of the bead portions 37a and 37b in the vehicle width direction are disposed at the fronts or the rears of the protruding portions 35 and 36. The front bead portion 37a curves to the front of the vehicle as it extends outward in the vehicle width direction. The outer portion of the front bead portion 37a in the vehicle width direction is disposed at the front of the front protruding portion 35. The rear bead portion 37b curves to the rear of the vehicle as it extends outward in the vehicle width direction. The outer portion of the rear bead portion 37b in the vehicle width direction is disposed at the front of the rear protruding portion 36. The rear of the outer portion of the front bead portion 37a in the vehicle width direction is connected to the front of the inclined front protruding portion 35b of the front protruding portion 35, and the front of the outer portion of the rear bead portion 37b in the vehicle width direction is connected to the rear of the inclined rear protruding portion 36b of the rear protruding portion 36.

Furthermore, in the present embodiment, the floor cross member 41 located on the vehicle upper side of the reinforcing bracket 30 is provided with a seat bracket 45. The seat bracket 45 is joined to the side sill 2. The seat bracket 45 is a bracket to which a seat rail on which a vehicle seat is to be slidably attached is joined. The seat bracket 45 is a rigid member made of a metallic material. For example, the seat bracket 45 may be configured such that the bottom of a vehicle seat is directly attached to the seat bracket 45. The lower portion of the seat bracket 45 may be joined to, for example, the upper surface portion, the front surface portion, and the rear surface portion of the floor cross member 41 by spotwelding.

Furthermore, a flange 45f protruding outward in the vehicle width direction is provided on the lower end of the outer portion of the seat bracket 45 in the vehicle width direction. The flange 45f is joined to the inner upper-surface part 22 of the side-sill inner panel 20 of the side sill 2 by spotwelding. For example, the flange 45f and the inner upper-surface part 22 may be joined such that the outer part of the floor panel 42 in the vehicle width direction is interposed therebetween in a three-layer structure (Figure 5).

The description of the present embodiment is merely an exemplification for describing the present invention and does not limit the invention as claimed in the claims. Furthermore, the configurations of the present invention are not limited to the foregoing embodiment and can be modified in various ways within the technical scope of the claims.

In the present embodiment, the front fragile portion 31h and the rear fragile portion 32h extend from the corner portion of nearly a right angle on the upper outer side of the front wall part 31 and the rear wall part 32 in a direction at about 45° so as to divide the right angle into two equal portions. The configuration is not limited thereto. The fragile portions may extend downward from the corner portion or extend inward from the corner portion in the vehicle width direction.

Furthermore, for example, the front fragile portion 31h of the present embodiment is formed to protrude frontward from the front wall part 31. The configuration is not limited thereto. For example, the fragile portion may be a long hole extending in a direction at about 45°. In addition, the fragile portions 31h and 32h do not necessarily have long lengths. Circular through holes may be provided instead in a region extending downward and inward from the corner portion.

### [Reference Signs List]

- 1: Battery pack
- 2: Side sill
- 5: Battery holding member
- 20: Side-sill inner panel
- 21: Inside wall-surface part
- 22: Inner upper-surface part
- 22f: Upper inner flange
- 23: Corner portion
- 24: Inner bottom part
- 24f: Lower inner flange
- 26: Inner reinforcement
- 30: Reinforcing bracket
- 31: Front wall part (vertical wall part)
- 31a: Front upper flange portion
- 31b: Front outer flange portion
- 31g: Front notch (notch)
- 31h: Front fragile portion (fragile portion)
- 32: Rear wall part (vertical wall part)
- 32a: Rear upper flange portion
- 32b: Rear outer flange portion
- 32g: Rear notch (notch)
- 32h: Rear fragile portion (fragile portion)
- 33: Inside wall part
- 33a: Front edge-line portion
- 33b: Rear edge-line portion
- 33d: Inner gap portion
- 34: Lower joining portion
- 34a: Rib
- 35: Front protruding portion (protruding portion)
- 35a: Horizontal protruding portion
- 35b: Inclined protruding portion
- 35c: Connecting portion
- 35d: Outer gap portion
- 36: Rear protruding portion (protruding portion)
- 36a: Horizontal rear protruding portion
- 36b: Inclined rear protruding portion
- 36c: Connecting portion
- 36d: Outer gap
- 37a: Front bead portion (bead portion)
- 37b: Rear bead portion (bead portion)
- 41: Floor cross member
- 41a: Front wall portion
- 41b: Rear wall portion
- 41c: Upper surface portion
- 41d: Front member flange
- 41f: Rear member flange
- 42: Floor panel
- 45: Seat bracket
- 45f: Flange

## Claims

1. A lower structure for an electric vehicle, comprising: a battery pack disposed on a lower side of a floor part of a vehicle; a side sill that is disposed outside the battery pack in a vehicle width direction, is joined to the floor part, and extends in a vehicle longitudinal direction; and a cross member that is joined to an upper part of the floor part and extends in the vehicle width direction, **characterized in that**:
the lower structure includes a bracket disposed on a vehicle lower side of an outer part of the cross member in the vehicle width direction with the floor part interposed between the bracket and the cross member;
the bracket includes vertical wall parts that are spaced apart from each other in the vehicle longitudinal direction and are joined to the side sill and the floor part, and an inside wall part that connects the vertical wall parts at a front side and at a rear side;
the inside wall part is spaced on an outer part of the battery pack, inclines toward a lower side of the vehicle as the inside wall part extends from an inner end in the vehicle width direction to outside in the vehicle width direction, and extends to an inner part of the side sill in the vehicle width direction; and
a fragile portion is provided in an outer portion of an upper part of the vertical wall part in the vehicle width direction.

2. The lower structure for an electric vehicle according to claim 1, wherein the fragile portion extends from the upper portion of the vertical wall part and outside in the vehicle width direction to the inside wall part.

3. The lower structure for an electric vehicle according to claim 1 or 2, wherein
the outer portion of the vertical wall part in the vehicle width direction extends in a vehicle vertical direction and is joined to the inner part of the side sill in the vehicle width direction, and the upper part of the vertical wall part extends in the vehicle width direction and is joined to a lower part of the floor part, and
the fragile portion is provided at a corner portion formed by an outer portion and the upper portion of the vertical wall part in the vehicle width direction.

4. The lower structure for an electric vehicle according to claim 1 or 2, wherein
an edge-line portion is formed by the vertical wall part and the inside wall part, and
the fragile portion and the edge-line portion are spaced apart.

5. The lower structure for an electric vehicle according to claim 1 or 2, wherein
an extending portion that extends toward the side sill and is joined to a lower part of the side sill is provided in a lower portion of the inside wall part, and
in the vehicle width direction, an inner portion of the fragile portion is disposed inside an inner portion of the extending portion.

6. The lower structure for an electric vehicle according to claim 5, wherein the inside wall part is provided with a protruding portion that extends from an upper portion of the inside wall part to the extending portion and protrudes downward.

7. The lower structure for an electric vehicle according to claim 1, wherein in the vehicle longitudinal direction, the vertical wall part located at a front side and the vertical wall part located at a rear side are arranged to be separate from each other as the vertical wall parts extend upward.
